# EUROPEAN PATENT APPLICATION

(11) **EP 3 301 660 A1**
(43) Date of publication of application: **04.04.2018**
(21) Application number: 17194225.3
(22) Date of filing: 29.09.2017
(51) Int. Cl.: G08G 5/00, G09B 9/24

(54) **SYSTEM AND METHOD FOR VIRTUAL REALITY SIMULATION OF VEHICLE TRAVEL**

(30) Priority: 03.10.2016 IN 201611033781; 21.12.2016 US 201615387441
(71) Applicant: Honeywell International Inc., Morris Plains, NJ 07950 (US)
(72) Inventor: SRIVASTAV, Amit, Morris Plains, NJ New Jersey 07950 (US); KUSUMA, Murali Krishn, Morris Plains, NJ New Jersey 07950 (US); AZEEZ, Rasna, Morris Plains, NJ New Jersey 07950 (US)
(74) Representative: Houghton, Mark Phillip

(57) **Abstract**

A method for virtual reality simulation is provided. The method comprises: selecting a time during the travel path of the vehicle; determining a position of the vehicle at the selected time; building a bounding region proximate to the determined position; identifying data associated with one or more locations proximate to the bounding region; generating a graphical representation, representing virtual reality, of the bounding region using the data; and displaying the graphical representation representing virtual reality.

## Description

### CROSS-REFERENCE TO RELATED APPLICATION

This application claims the benefit of provisional Indian Provisional Patent Application Ser. No. 201611033781 filed October 3, 2016, which is incorporated herein by reference in its entirety.

### BACKGROUND

Modern avionics displaying a significant amount of complex data. Further, pilots benefit from advance warning of events which may increase risk during travel of their aircraft. Therefore, to better manage the risk, there is a need for a system to display such data, in a manner easily and quickly understood by pilots, representative of present and future instances of time during the flight of their aircraft.

### SUMMARY

A method for virtual reality simulation is provided. The method comprises: selecting a time during the travel path of the vehicle; determining a position of the vehicle at the selected time; building a bounding region proximate to the determined position; identifying data associated with one or more locations proximate to the bounding region; generating a graphical representation, representing virtual reality, of the bounding region using the data; and displaying the graphical representation representing virtual reality.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1A illustrates a block diagram of an exemplary vehicle including a vehicle processing system;
Figure 1B illustrates a diagram of an exemplary communications network;
Figure 2 illustrates a block diagram of an exemplary vehicle data management system;
Figure 3 illustrates an exemplary method of the operation of a vehicle processing system; and
Figure 4 is an exemplary two-dimensional image of three-dimensional image generated and projected by the vehicle processing system.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, the method presented in the drawing figures and the specification is not to be construed as limiting the order in which the individual steps may be performed. The following detailed description is, therefore, not to be taken in a limiting sense.

A vehicle processing system may be used to overcome the above referenced problems specified in the Background section above. The embodiments of the vehicle processing system have at least one advantage. The vehicle processing system displays, using virtual reality, a fusion of differing data that would otherwise require a vehicle operator, *e.g*. a pilot, to obtain less efficiently from multiple sources. Although the present invention is sometimes exemplified being used in an aircraft, it is envisioned that it can be used in other vehicles including without limitation space craft, ships, automobiles, buses, trains, and any other vehicle.

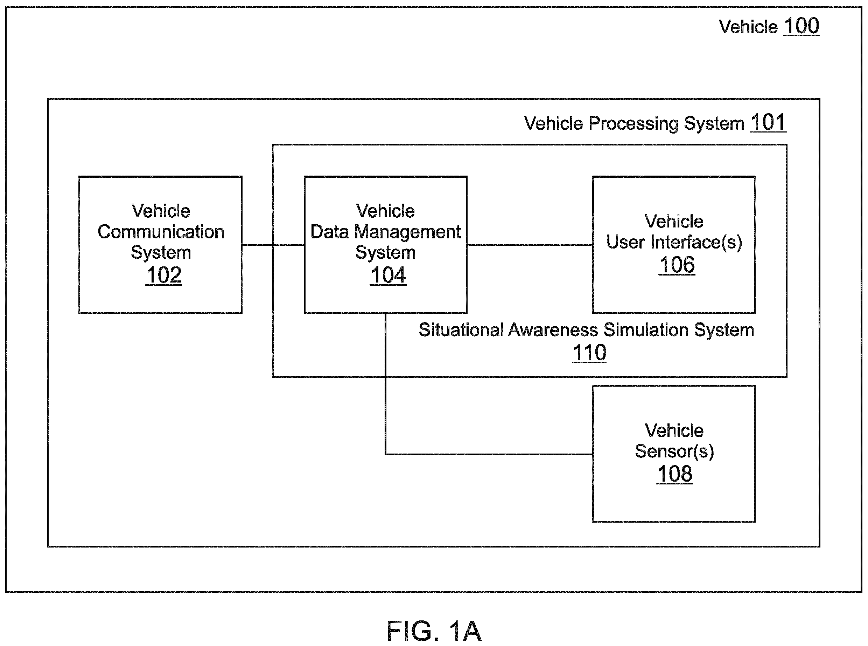

Figure 1A illustrates an exemplary block diagram of a vehicle 100 including a vehicle processing system 101. In one embodiment, the vehicle processing system 101 comprises a situational awareness simulation system 110 coupled to one or more vehicle sensors 108, and a vehicle communications system 102. In another embodiment, the situational awareness simulation system 110 includes a vehicle data management system 104 coupled one or more vehicle user interfaces 106. In a further embodiment, the vehicle data management system 104 is a Flight Management System (FMS).

The situational awareness simulation system 110, *e.g.* the vehicle data management system 104, is configured to receive data from the one or more vehicle sensors 108 and the vehicle communications system 102. In one embodiment, the situational awareness simulation system 110, *e.g.* the vehicle data management system 104, is configured to transmit data through the vehicle communications system 102.

The one or more vehicle sensors 108 gather data about or related to the vehicle 100. In one embodiment, the one or more vehicle sensors 108 include pitot tube(s), altimeter(s), a GPS receiver, an ADS-B receiver, and a weather radar to respectively measure vehicle speed, height, and location, and data about local air traffic and weather systems which is provided to the situational awareness simulation system 110, *e.g*. the vehicle data management system 104. In another embodiment, the vehicle communications system 102 includes HF, VHF, cellular, satellite transceivers, and/or other communications transceivers to transmit and receive data respectively to and from remote locations, *e.g*. an operations center, ground station, another vehicle or a satellite. In a further embodiment, such data may include Notice To Airman (NOTAM), weather data, traffic data (*e.g*. from an aircraft situation display to industry (ASDI) data stream) about other vehicles, and geopolitical data which is provided to the situational awareness simulation system 110, *e.g.* the vehicle data management system 104. In yet another embodiment, some of this data, *e.g*. weather data and traffic data, is supplied by a service provider, under a subscription service, *e.g*. subscribed to by the owner of the vehicle 100.

In one embodiment, the situational awareness simulation system 110 provides the operator of the vehicle 100 with a virtual reality display of a confluence of different types of data. In another embodiment, such data provides differing types of information proximate to the location of the vehicle 100 in a present time or future time depending upon the input of the operator of the vehicle 100. Thus, for example, such data may be future predicted weather (a) in a location through which the vehicle 100 is expected to travel, and (b) at a time when the vehicle 100 is expected to be at that location. Also, in another example, such data may be (a) a location of other vehicles proximate to a location through which the vehicle 100 is expected to travel, and (b) at a time when the vehicle 100 is expected to be at that location.

The one or more vehicle user interfaces 106 permit the operator of the vehicle 100 to input data, and to display information to the operator. In one embodiment, the one or more vehicle interfaces 106 include one or more of a primary flight display, an electronic flight bag, and/or any other type of display. The one or more vehicle interfaces 106 include at least one virtual reality display, such as the primary flight display, the electronic flight bag, and/or the any other type of display. The virtual reality display may be a virtual reality headset, or a display viewed with specialized glasses, *e.g*. to simulate a 3D effect.

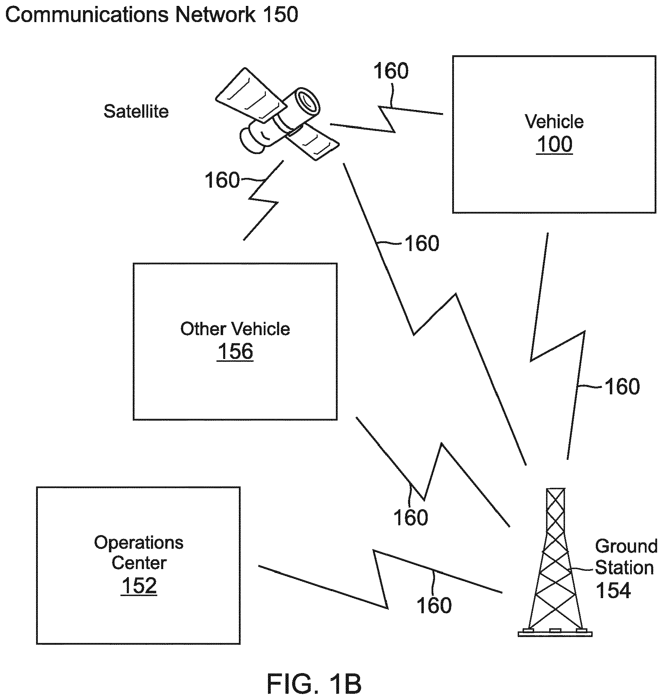

Figure 1B illustrates a diagram of an exemplary communications network 150. In one embodiment, the communications network 150 includes the vehicle 100, another vehicle 156, a ground station 154, a satellite 158, and an operations center 154. In another embodiment, the operations center 154 is the vehicle owner's operation center, *e.g*. an airline operation center, or a vehicle traffic control center, *e.g*. an air traffic control center.

In one embodiment, the operations center 152 is coupled to the ground station 154 by a communications link 160 which includes without limitation one or more of a dedicated communications links and/or a wide area networks. Such links and networks may include an HF or VHF radio network, fiber optic network, cellular network, and any other type communications system. In another embodiment, the ground station 154 is coupled to one or more satellites 158, the other vehicle 156 and the vehicle 100. Because the vehicles and satellite 158 move, connections to them must be made through wireless means. In a further embodiment, the ground station 154 may be part of the operations center 152 or may be located elsewhere, for example on a ship, on another vehicle, or at one or more fixed terrestrial locations. Data may be communicated to the vehicle 100 from the operations center 152, another vehicle 156, or another location through a combination of one or more of the ground station 154, satellite 158, and the other vehicle 156.

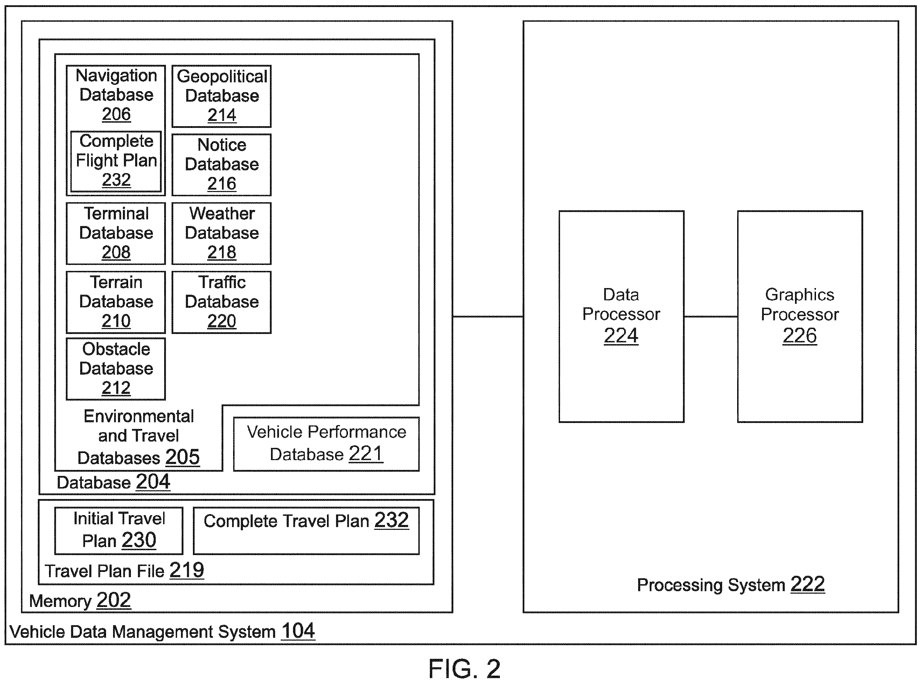

Figure 2 illustrates a block diagram of an exemplary vehicle data management system 104. The vehicle data management system 104 includes a memory 202 coupled to a processing system 222. In one embodiment, the processing system 222 includes a data processor 224 coupled to a graphics processor 226. In another embodiment, the memory 202 includes, or stores, a database 204 and a travel plan file 219.

In one embodiment, the processing system 222, *e.g*. the data processor 224, selects and unifies data (including data to be displayed and geographic coordinates) stored in the database 202. The graphics processor 226 converts the unified data into a graphical representation that can be projected on a virtual reality display that is part of the vehicle user interface(s) 106.

In one embodiment, the database 202 includes data that can be used to create a projected image, *e.g.* on a virtual reality display, to display the locations of the vehicle 100, other vehicles 156, weather, prohibited travel regions, potential travel obstacles, municipalities, and terminals. In another embodiment, information stored in the database 204 represents time invariant, or static, data, *e.g*. data about terrain and/or obstacles including their location, and/or time varying, or dynamic, data, *e.g*. data about weather and/or traffic including their location at different times. Databases with time invariant data are static database. Databases with time varying data are dynamic databases.

In one embodiment, the database 204 includes one or more sub-databases. In another embodiment, the database 204 includes one or more environmental and travel databases 205, a vehicle performance database 221. In a further embodiment, the environmental and travel databases 205 include data about the environment in which the vehicle 100 is travelling, and information pertaining to travel by the vehicle 100. The environmental and travel databases 205 may include one or more of a navigation database 206, a terminal database 208, a terrain database 210, an obstacle database 212, geopolitical database 214, notice database 216, weather database 218, and a traffic database 220.

In one embodiment, the terrain database 210 includes topographic data, *e.g.* including photographs and/or other information to generate graphical topographic models, about regions including those through which the vehicle 100 will travel. In another embodiment, the terminal database 208 includes more detailed map, *e.g.* geographical and/or photographic information, about terminals where the vehicle 100 will depart, arrive, pass through, or may alternatively travel to or through. In a further embodiment, the terminal database 208 may include information about runways, railroad tracks, streets, and/or waterways, including identifiers.

In one embodiment, the navigation database 206 is a hybrid comprising two portions: static data and dynamic data. Static data includes the location of municipalities *(e.g.* cities and towns), terminals *(e.g.* airports, railway stations, and ports), bodies of water (*e.g*. including identifiers for navigable waterways), roadways *(e.g.* streets and highways), service centers *(e.g.* sources of fuel and maintenance service), land marks, and any other points of interest that would be found on a map and whose location is time invariant. The dynamic data includes three-dimensional coordinates for the intended path of travel of the vehicle 100, and alternate paths of travel of the vehicle 100 (*e.g.* to avoid weather or other vehicles 156.

In one embodiment, data about the travel path of the vehicle 100 may be stored in the navigation database 206 or travel plan file 219, as will be further described below. In another embodiment, the navigation database 206 is a static database only including static data, and the dynamic data is stored elsewhere, such as in the travel plan file 219.

In one embodiment, should the travel path of the vehicle 100 be modified, corresponding data about the travel path is modified, *e.g.* in the navigation database 206 and/or travel plan file 219. In another embodiment, the data about the travel path of the vehicle 100, *e.g.* in the navigation database 206 and/or travel plan file 219, is modified based upon position coordinates, or location, of the vehicle 100 received from at least one of the one or more vehicle sensors 108, *e.g.* a navigation system such as a GPS or LORAN receiver system.

In one embodiment, the obstacle database 212 includes data about obstacles such as structure type, and their location, *e.g*. position, and dimensions. In another embodiment, such data may include photographs and/or other information to create graphical models of such obstacles.

In one embodiment, the geopolitical database 214 includes the location of the borders of nations and states (and corresponding labels). In another embodiment, the geopolitical database may include data about conflicts and notices to avoid certain regions, *e.g*. no fly zones. In a further embodiment, the notice database includes alerts, *e.g.* NOTAM alerts, issued to an operator of the vehicle 100, and corresponding information, *e.g.* relevant location.

In one embodiment, the weather database 218 includes data about weather systems, including an identifier of weather system type, and their location and expected travel path, *e.g*. location with respect to time. In another embodiment, the traffic database 220 includes data about other vehicles 156, including their identifier, type, and location and expected travel path, *e.g.* location with respect to time.

In one embodiment, based on dynamic data (*e.g.* traffic of other vehicles 156, weather, notice, or geopolitical data), the vehicle data management system 104 is configured to provide alternative paths to the operator of the vehicle 100. The operator of the vehicle 100 may select a proposed alternative path, and the vehicle data management system 104 creates a corresponding modified complete travel path 232.

The vehicle performance database 221 includes characteristics of the vehicle 100 rather than the environment. Such characteristics of the vehicle 100 may include range, gross and empty weight, rate of climb, fuel capacity, maximum speed, fuel burn rate, ground roll at takeoff and landing, and typical indicated airspeed or true airspeed, *e.g.* at different flight levels.

In one embodiment, the memory 202 may also include the travel plan file 219. The travel plan file 219 stores an initial travel plan 230 that is submitted by the operator of the vehicle 100. For example, when the vehicle 100 is an aircraft, the aircraft operator, *i.e.* pilot, or airline submits the initial travel plan 230, *i.e.* an initial flight plan, to the US Federal Aviation Administration (FAA).

In one embodiment, the initial travel plan 230 includes an identifier of the vehicle 100, information about the vehicle 100 (*e.g*. manufacturer and type of vehicle 100, color and any special equipment on the vehicle 100), expected speed of the vehicle 100, departure location (or departure terminal) and time, information about travel path (e.g. cruising altitude, airways, and checkpoints), and arrival location(s) (or destination(s) or terminal(s)), estimated time en route, fuel on board, alternate arrival locations (or destination(s) or terminal(s)) in case of inclement weather, type of travel (*e.g*. for aircraft whether instrument flight rules (IFR) or visual flight rules (VFR) apply), information about the operator of the vehicle 100 (*e.g.* pilot), and number of people on board the vehicle 100.

The vehicle data management system 104, *e.g.* the data processor 224, utilizes the vehicle performance database 221, *i.e.* vehicle characteristics, and the initial travel plan 230 to generate a more detailed travel path, the complete travel path 232. The complete travel path 232 specifies, with respect to time, the expected three-dimensional position (or location) and other parameters (*e.g*. vector velocity, fuel consumption, elapsed time, time to destination, and fuel remaining) of the vehicle 100 at all times during the prospective travel. The complete travel path 232 may be modified, *i.e.* becoming a modified complete travel path, during travel by the vehicle 100 if the vehicle 100 deviates from its planned route, *e.g.* to avoid bad weather or in the event of an emergency.

In one embodiment, the complete travel path 232 is stored in the travel plan file 219. In another embodiment, the complete travel path 232 is stored in the navigation database 206. In a further embodiment, the complete travel path 232 is stored in both the navigation database 206 and the travel plan file 219.

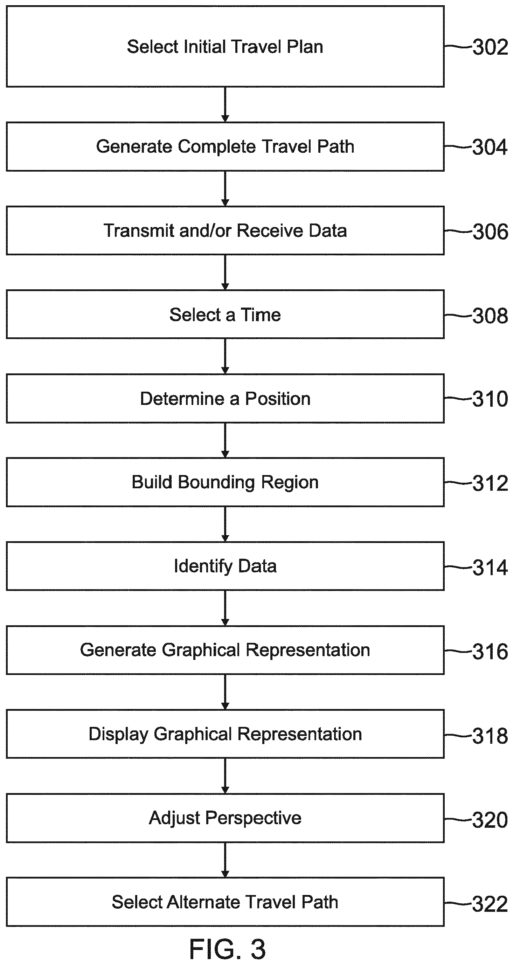

Figure 3 illustrate an exemplary method of the operation 300 of a vehicle processing system 101. In block 302, an initial travel plan 230 is selected. In one embodiment, is selected by the operator of the vehicle 100 or an operations center 152. In another embodiment, the initial travel plan 230 is stored, upon its receipt, in the vehicle data management system 104, *e.g.* the memory 202. In a further embodiment, the initial travel plan 230 is entered by the vehicle operator, sent from an operations center 152, or obtained from another source such as the US FAA's system wide information management (SWIM) system. In yet another embodiment, the initial travel plan 230 is received and stored prior to the departure of the vehicle 100 from its departure location (or departure terminal).

In block 304, generate a complete travel path 232. In one embodiment, the vehicle data management system 104 generates a complete travel path 232, *e.g.* by processing the initial travel plan 230 and the vehicle performance database 221 as further described above. In another embodiment, the complete travel path 232 is generated prior to the departure of the vehicle 100 from its departure location (or departure terminal).

In block 306, transmit and/or receive data respectively to and from the vehicle 100 to another site, *e.g*. an operations center 152. In one embodiment, the data received by the vehicle 100 is pertinent to the travel path of the vehicle 100. In another embodiment, the data received by the vehicle 100 is stored in one or more of the environmental and travel databases 205. In a further embodiment, the data received by the vehicle 100 may be data about the current and future positions of other vehicles 156, *e.g.* to update the traffic database 220. In yet another embodiment, the transmitted data may be information about weather systems proximate to the expected path of the vehicle 100, *e.g.* to update the weather database 218. In yet a further embodiment, the transmitted data may be alerts such as NOTAMs. In another further embodiment, the data transmitted by the vehicle 100 is the three-dimensional position of the vehicle 100 at an instance in time, or a modified complete travel path if the vehicle 100 deviates from its intended course.

In one embodiment, some such information is received and/or transmitted before the vehicle 100 departs from its departure location (or departure terminal). In another embodiment, some such information is received and/or transmitted during travel of the vehicle 100.

In block 308, select a current or future instance in time during the vehicle travel, *e.g.* the present time or future time during travel, *e.g.* at the start of travel, during the midst, or end of travel, *e.g.* as specified in the initial travel plan 230 or complete initial travel plan 230. In one embodiment, the instance of time is selected by an individual, *e.g*. the operator of the vehicle 100, by adjusting a time control, *e.g*. a slider on the vehicle user interface(s) 106.

In block 310, determine the position, or location, of the vehicle 100 based upon the selected time. In one embodiment, if a future time is selected, determine the position of the vehicle 100 based upon the complete travel path 232. In another embodiment, if the present time is selected, determine the position of the vehicle 100 based upon the navigation system of the vehicle 100 and/or the complete travel path 232.

In block 312, build a bounding region, *e.g*. around or otherwise proximate to the determined position, or location, of the vehicle 100. The bounding region is a three-dimensional bounding volume such as a polyhedron or a spheroid. In one embodiment, the operator of the vehicle 100 defines the dimensions of the bounding region. In another embodiment, the bounding region is proximate to the determined position of the vehicle 100. In a further embodiment, the bounding region is centered on the determined position of the vehicle 100.

In block 314, determine or identify, *e.g.* using the processing system 222 such as the data processor 224, if there is data from at least one of the environmental and travel databases 205 associated with location(s) proximate to the bounding region. In one embodiment, such data is within the bounding region. In another embodiment, such data is associated with location(s) within the bounding region, and location(s) proximate to and outside of the bounding region. In a further embodiment, if such data is identified, obtain, or select, such data from the environmental and travel databases 205. In yet another embodiment, if such data is identified, then combine such data, e.g. using the data processor 224.

In block 316, generate (or construct) a graphical representation, or graphical view volume, representing virtual reality *e.g*. using the processing system 222 such as the graphics processor 226, of the bounding region based upon the identified data. In one embodiment, the graphical representation is of the selected travel path and at a selected instance of time. In another embodiment, the graphical representation includes alternate travel paths suggested by the vehicle data management system 104 to circumvent potential disruptions to the travel of the vehicle 100, *e.g*. weather, other vehicles 156, or prohibited travel space.

In block 318, display the graphical representation emulating reality, *i.e.* a graphical representation of virtual reality. Virtual reality is a realistic and immersive simulation of a three-dimensional environment. In one embodiment, the graphical representation emulating reality is displayed on a virtual reality display which is part of the vehicle user interface(s) 106. In another embodiment, the default perspective of view of the graphical representation is the view that the operator of the vehicle 100 would see from their operating position, *e.g.* a cockpit.

In block 320, the operator of the vehicle 100 may adjust the perspective (or angle) of view of the graphical representation in each of one or more axes. In block 322, select an alternate travel path suggested by the vehicle data management system 104. In one embodiment, the operator of the vehicle 100 selects the alternate travel path. In another embodiment, the vehicle data management system 104 or the operations center 152 select the alternate travel path.

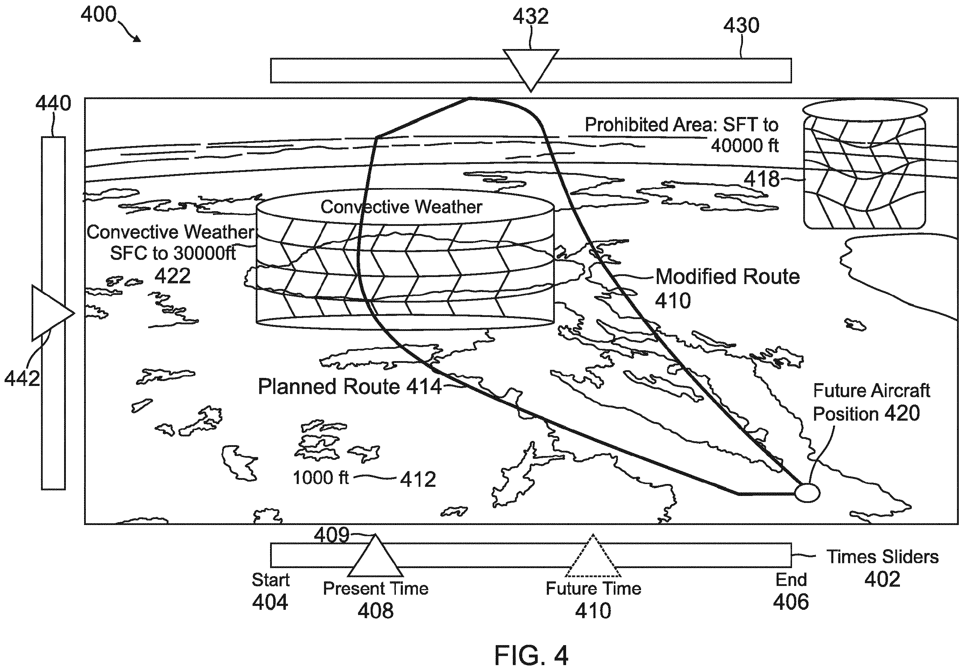

Figure 4 is an exemplary image 400 of a three-dimensional image generated and projected by the vehicle processing system 101. The three-dimensional image is projected on a vehicle user interface 106 that is a virtual reality display that emulates reality. The emulated reality may include other data, useful to the operator of the vehicle 100, pertaining to the emulated environment which is illustrated below and discussed above. For example, such other data may include identifying weather patterns, other vehicles 156, restricted travel areas, geographical regions, etc. Also, the emulated reality may be in the present or in the future.

The exemplary image 400 combines a variety of information from the different environmental and travel databases 205. Although the illustrated techniques are generally applicable to all types of vehicles, the exemplary image 400 is illustrated for a vehicle 100 that is an aircraft.

The exemplary image includes a time control indicator 402, *e.g.* a time slider with a slider icon 409, which defaults to present time 408, but may be moved to a future time 410. Thus, the time control indicator 402 is part of the image projected by the virtual reality display. In one embodiment, the time control indicator 402 is set by the operator of the vehicle 100. The setting of the time control indicator 402 determines the time used to determine position (or location) of the vehicle 100, and hence the position (or location) of the bounding region. The exemplary image 400 is for the future time 410 setting, illustrating navigational information such as the future location of the aircraft 420, the planned route (or flight path) 414, and a modified (or alternate) route 416 (or flight path) to avoid an undesirable weather pattern. Terrain information 412, *e.g*. ground level height of 1000 feet, is shown. Weather information 422, *e.g*. convective weather, is also displayed. Geopolitical data 418, *e.g.* a prohibited area (or airspace) from ground level to 4000 feet, is also illustrated.

In one embodiment, the exemplary image 400 also includes perspective controls. In one embodiment, the perspective control(s) are set by the operator of the vehicle 100. The exemplary image 400 includes an x-axis perspective slider 430 with an x-axis slider icon 432, which may be used to rotate the perspective (or angle) of view of the exemplary image 400 in the x-axis. In another embodiment, the exemplary image 400 also includes a y-axis perspective slider 440 with a y-axis slider icon 442, which may be used to rotate the perspective (or angle) of view of the exemplary image 400 in the y-axis.

### EXAMPLE EMBODIMENTS

Example 1 includes a situational awareness simulation system comprising: at least one user interface, wherein the at least one user interface comprises: at least one virtual reality display configured to display a graphical view volume; and a time control indicator; a vehicle data management system; and wherein the vehicle data management system is configured to: store at least one environmental and travel database; obtain a vehicle position based upon a time determined by a setting of the time control indicator; construct a bounding region proximate to the obtained vehicle position; identify data from the at least one environmental and travel database proximate to the bounding region; and construct a graphical view volume, representing virtual reality, based on the identified data.
Example 2 includes the situational awareness simulation system of Example 1, wherein the at least one environmental and travel database includes at least one dynamic database.
Example 3 includes the situational awareness simulation system of any of Examples 1-2, wherein the at least one user interface further comprises one or more perspective controls; and wherein the one or more perspective controls can be adjusted to alter the viewing perspective of the graphical view volume representing the virtual reality.
Example 4 includes the situational awareness simulation system of any of Examples 1-3, wherein the vehicle data management system comprises: a processing system comprising a data processor coupled to a graphics processor; a memory coupled to the processing system; and wherein the memory stores a database including the environmental and travel databases.
Example 5 includes the situational awareness simulation system of Example 4, wherein the memory stores a travel plan file including an initial travel plan.
Example 6 includes the situational awareness simulation system of any of Examples 4-5, wherein the environmental and travel databases include at least one of a navigation database, a weather database, a terminal database, a terrain database, an obstacle database, a notice database, a geopolitical database, and a traffic database.
Example 7 includes the situation awareness simulation system of any of Examples 4-6, wherein the navigation database includes a complete travel path.
Example 8 includes the situation awareness simulation system of any of Examples 4-7, wherein the database includes a vehicle performance database; and wherein the data processor is configured to generate the complete travel path using the vehicle performance database and the initial travel plan.
Example 9 includes the situation awareness simulation system of any of Examples 1-8, wherein the time control indicator is part of an image projected by the at least one virtual reality display.
Example 10 includes a method for virtual reality simulation, comprising: selecting a time during the travel path of the vehicle; determining a position of the vehicle at the selected time; building a bounding region proximate to the determined position; identifying data associated with one or more locations proximate to the bounding region; generating a graphical representation, representing virtual reality, of the bounding region using the data; and displaying the graphical representation representing virtual reality.
Example 11 includes the method of Example 10, further comprising adjusting the perspective of the displayed graphical representation.
Example 12 includes the method of Example 11, wherein adjusting the perspective of the displayed graphical representation comprises adjusting one or more sliders.
Example 13 includes the method of any of Examples 10-12, wherein selecting a time compromises adjusting a slider.
Example 14 includes the method of any of Examples 10-13, further comprising generating a complete travel path from an initial travel plan.
Example 15 includes the method of Example 14, wherein comprising generating a complete travel path from an initial travel plan comprises: selecting an initial travel plan; and generating a complete travel path from an initial travel plan and a vehicle performance database.
Example 16 includes the method of any of Examples 10-15, further comprising selecting an alternate travel path.
Example 17 includes the method of any of Examples 10-16, wherein identifying data associated with one or more location(s) proximate to the bounding region comprises identifying data, associated with one or more location(s) proximate to the bounding region, from at least one of navigation, terminal, terrain, obstacle, geopolitical, notice, weather and traffic databases.
Example 18 includes a vehicle processing system, comprising: a situational awareness simulation system; a vehicle communications system coupled to the situational awareness simulation system; at least one vehicle sensor coupled to the situation awareness simulation system; wherein the situational awareness simulation system comprises: a vehicle data management system; and at least one vehicle user interface coupled to the vehicle data management system; wherein the at least one vehicle user interface comprises at least one virtual reality display configured to display a graphical view volume representing virtual reality; and wherein the vehicle data management system comprises: a memory; a processing system coupled to the memory; wherein the memory comprises a travel plan file, a vehicle performance database and an environmental and travel databases; wherein the processing system comprises a data processor coupled to a graphics processor; wherein the data processor is configured to: obtain a vehicle position based upon a time determined by a setting of a time control indicator and a travel path; construct a bounding region proximate to the obtained vehicle position; and identify data from at least one of the environmental and travel databases proximate to the bounding region; and wherein the graphics processor is configured to construct a graphical view volume representing virtual reality based on the identified data.
Example 19 includes the vehicle processing system of Example 18, wherein the environmental and travel databases include at least one of a navigation database, a weather database, a terminal database, a terrain database, an obstacle database, a notice database, a geopolitical database, and a traffic database.
Example 20 includes the vehicle processing system of any of Examples 18-19, wherein the time control indicator is part of an image projected by the at least one virtual reality display.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A situational awareness simulation system (110) comprising:
at least one user interface (106), wherein the at least one user interface (106) comprises:
at least one virtual reality display configured to display a graphical view volume; and
a time control indicator (402);
a vehicle data management system (104); and
wherein the vehicle data management system (104) is configured to:
store at least one environmental and travel database (205);
obtain a vehicle position based upon a time determined by a setting of the time control indicator (402);
construct a bounding region proximate to the obtained vehicle position;
identify data from the at least one environmental and travel database (205) proximate to the bounding region; and
construct a graphical view volume, representing virtual reality, based on the identified data.

2. The situational awareness simulation system (110) of claim 1, wherein the vehicle data management system (101) comprises:
a processing system (222) comprising a data processor coupled to a graphics processor (226);
a memory (202) coupled to the processing system (222); and
wherein the memory (202) stores a database (204) including the environmental and travel databases (205).

3. The situational awareness simulation system (110) of claim 2, wherein the memory (202) stores a travel plan file (219) including an initial travel plan (230).

4. The situational awareness simulation system (110) of claim 2, wherein the environmental and travel databases (205) include at least one of a navigation database (206), a weather database (218), a terminal database (208), a terrain database (210), an obstacle database (212), a notice database (216), a geopolitical database (214), and a traffic database (220).

5. The situation awareness simulation system (110) of claim 4, wherein the navigation database (206) includes a complete travel path.

6. The situation awareness simulation system (110) of claim 2, wherein the database (204) includes an aircraft performance database (221); and
wherein the data processor (224) is configured to generate the complete travel path using the aircraft performance database (221) and the initial travel plan (230).

7. A method for virtual reality simulation, comprising:
selecting a time during the travel path of the vehicle (100);
determining a position of the vehicle (100) at the selected time;
building a bounding region proximate to the determined position;
identifying data associated with one or more locations proximate to the bounding region;
generating a graphical representation, representing virtual reality, of the bounding region using the data; and
displaying the graphical representation representing virtual reality.

8. The method of claim 7, further comprising adjusting the perspective of the displayed graphical representation.

9. The method of claim 7, further comprising generating a complete travel path from an initial travel plan (230).

10. The method of claim 7, further comprising selecting an alternate travel path.
